# EUROPEAN PATENT SPECIFICATION

(11) **EP 4 135 391 B1**
(45) Date of publication and mention of the grant of the patent: **28.10.2026**
(21) Application number: 21795373.6
(22) Date of filing: 26.04.2021
(51) Int. Cl.: H04B 17/24, H04B 17/309, H04L 1/00, H04L 5/00, H04W 24/08

(54) **METHOD FOR ADJUSTING CHANNEL QUALITY INDICATOR (CQI), AND TERMINAL DEVICE**
VERFAHREN ZUR ANPASSUNG EINES KANALQUALITÄTSINDIKATORS (CQI) UND ENDGERÄTEVORRICHTUNG
PROCÉDÉ DE RÉGLAGE D'INDICATEUR DE QUALITÉ DE CANAL (CQI) ET DISPOSITIF TERMINAL

(30) Priority: 30.04.2020 CN 202010365672
(43) Date of publication of application: 15.02.2023
(73) Proprietor: Huawei Technologies Co., Ltd., Shenzhen, Guangdong 518129 (CN)
(72) Inventor: YANG, Jianhua, Shenzhen, Guangdong 518129 (CN); GUO, Ao, Shenzhen, Guangdong 518129 (CN); XUE, Yifan, Shenzhen, Guangdong 518129 (CN); XU, Kun, Shenzhen, Guangdong 518129 (CN)
(74) Representative: MERH-IP Matias Erny Reichl Hoffmann Patentanwälte PartG mbB
(86) International application number: PCT/CN2021/089983
(87) International publication number: WO 2021/218925

(56) References cited:
- WO-A1-2008/143566
- CN-A- 101 018 387
- CN-A- 101 521 904
- CN-A- 101 783 716
- CN-A- 105 338 565
- US-A1- 2009 287 970
- US-A1- 2015 071 267
- US-A1- 2017 150 375
- US-A1- 2018 234 207

## Description

### TECHNICAL FIELD

This application relates to the communications field, and more specifically, to a channel quality indicator CQI adjustment method and a terminal device.

### BACKGROUND

In both LTE and NR systems, a channel quality indicator (Channel Quality Indicator, CQI) is used to quantify downlink channel quality. The CQI is obtained by a terminal device (User Equipment, UE) through estimation based on a downlink reference signal received by the terminal device. The UE reports the estimated CQI to an access network device, and the access network device selects an appropriate modulation and coding scheme (Modulation and Coding Scheme, MCS), a code rate, and the like based on the CQI, to schedule the UE; or the access network device adjusts, based on an outer-loop adjustment mechanism, the CQI obtained by the UE through estimation, and then selects an appropriate MCS, a code rate, and the like based on the adjusted CQI, to schedule the UE. However, accuracy of the MCSs and code rates selected in the two manners are not high.

Therefore, how to adjust a channel quality indicator CQI to improve accuracy of an MCS and a code rate that are selected based on the CQI is an urgent problem to be resolved.

Document US 2009/287970 A1 generally discloses a communication terminal device and a reception environment reporting method. In particular, an SIR measuring section measures an SIR from a reception signal that has been received from a base transceiver station. A CQI converter converts the SIR that has been measured by the SIR measuring section into a CQI value. A BLER calculating section calculates a block error rate of the reception signal. A CQI correcting section corrects the CQI value that has been calculated by the CQI converter, in accordance with the block error rate. A CQI transmitter transmits the CQI value that has been corrected by the CQI correcting section, to the base transceiver station.

Document US 2017/150375 A1 generally discloses a method for improving network performance, comprising: according to the signal-to-interference-plus-noise ratio (SINR) of high speed physical downlink shared channels (HS-PDSCHs) on two or more than two carriers, which is obtained by way of measurement, respectively acquiring, by a UE, a CQI of the HS-PDSCH on each carrier; when it is determined that the difference between the SINR of the HS-PDSCH on one or more than one carrier in all the carriers and the maximum SINR of the HS-PDSCHs on all the carriers is greater than a first threshold value, updating the CQI of the HS-PDSCH on the one or more than one carrier; and reporting the CQIs of the HS-PDSCHs on all the carriers to a network side, the CQIs being used for the network side to schedule the UE. Also disclosed at the same time are a UE and a storage medium.

Document US 2018/234207 A1 generally discloses a method at a client that includes monitoring a data connection to a server, adjusting a value of a channel quality indicator based on the detection of a start of a data transmission from the server, and transmitting the adjusted value of the channel quality indicator to the server.

Document CN 101 783 716 A generally discloses a method and a device for reporting a channel quality indicator, wherein the method comprises the following steps: counting a demodulation coding performance of a channel of a terminal; adjusting the channel quality indicator by using the counted demodulation coding performance and the set target demodulation coding performance; and transmitting the adjusted channel quality indicator to a network side.

### SUMMARY

This application provides a channel quality indicator CQI adjustment method and a terminal device. The channel quality indicator CQI adjustment method improves accuracy of an MCS and a code rate that are selected based on a CQI. In particular, embodiments of the present invention are defined by the independent claims. Additional features of embodiments of the invention are presented in the dependent claims.

### BRIEF DESCRIPTION OF DRAWINGS

FIG. 1 is a schematic diagram of an application scenario according to an embodiment of this application;
FIG. 2 is a schematic diagram of a scenario in which pilot signals of intra-frequency neighboring cells collide;
FIG. 3 is a schematic flowchart of a channel quality indicator CQI adjustment method according to an embodiment of this application;
FIG. 4 is a schematic flowchart of a channel quality indicator CQI adjustment method. The parts of the description relating to FIG. 4 which concern determining the CQI adjustment amount only on the basis of demodulation results of N transport blocks do not describe the claimed invention and are retained for illustration purposes only.
FIG. 5 is a schematic flowchart of a channel quality indicator CQI adjustment method according to an embodiment of this application;
FIG. 6 is a schematic block diagram of a communications apparatus according to an embodiment of this application; and
FIG. 7 is a schematic diagram of a structure of a terminal device according to this application.

### DESCRIPTION OF EMBODIMENTS

The following describes technical solutions of this application with reference to the accompanying drawings.

To better understand this application, terms that may appear in embodiments of this application are first explained.

The technical solutions of embodiments of this application may be used in various communications systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communications system, and a fifth generation (5th generation, 5G) system or a new radio (new radio, NR) system. In addition, the communications system may be further used in a subsequent evolved system, for example, a sixth generation 6G communications system or even a more advanced seventh generation 7G communications system.

A terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communications device, a user agent, a user apparatus, or the like.

The terminal device may be a wireless terminal or a wired terminal. The wireless terminal may be a device that provides a user with voice and/or other service data connectivity, a handheld device with a wireless connection function, or another processing device connected to a wireless modem. The wireless terminal may communicate with one or more core networks through a radio access network (Radio Access Network, RAN). The wireless terminal may be a mobile terminal, for example, a mobile phone (which is also referred to as a "cellular" phone) or a computer having a mobile terminal, for example, may be a portable, pocket-sized, handheld, computer built-in, or in-vehicle mobile apparatus, which exchanges voice and/or data with the radio access network. For example, the wireless terminal may be a device such as a personal communication service (Personal Communication Service, PCS) phone, a cordless phone, a session initiation protocol (Session Initiation Protocol, SIP) phone, a wireless local loop (Wireless Local Loop, WLL) station, or a personal digital assistant (Personal Digital Assistant, PDA). The wireless terminal may also be referred to as a system, a subscriber unit (Subscriber Unit), a subscriber station (Subscriber Station), a mobile station (Mobile Station), a mobile console (Mobile), a remote station (Remote Station), a remote terminal (Remote Terminal), an access terminal (Access Terminal), a user terminal (User Terminal), a user agent (User Agent), user equipment (User Device or User Equipment), a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a vehicle-mounted device, a wearable device, a terminal device in a 5G network, a terminal device in a future evolved public land mobile network (public land mobile network, PLMN), or the like. This is not limited in embodiments of this application.

By way of example but not limitation, in embodiments of this application, the wearable device may also be referred to as a wearable intelligent device, and is a generic term for wearable devices such as glasses, gloves, watches, clothes, and shoes that are developed based on intelligent design of daily wearing by using wearable technologies. The wearable device is a portable device that can be directly worn by a user or integrated into clothes or an accessory of the user. The wearable device is not only a hardware device, but also implements a powerful function through software support, data exchange, and cloud interaction. In a broad sense, wearable intelligent devices include full-featured and large-size devices that can implement complete or partial functions without depending on smartphones, for example, smart watches or smart glasses, and devices that dedicated to only one type of application function and that need to work with other devices such as smartphones, for example, various smart bands or smart accessories for monitoring physical signs.

In addition, the terminal device in embodiments of this application may alternatively be a terminal device in an internet of things (internet of things, IoT) system. IoT is an important part of future information technology development. A main technical feature of the IoT is connecting things to a network by using communication technologies, to implement an intelligent network for interconnection between persons and machines, and between things.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs).

In embodiments of this application, the terminal device may further include a relay (relay). Alternatively, it is understood that any device that can perform data communication with a base station may be considered as a terminal device.

An access network device in embodiments of this application may be a device for communicating with a terminal device, may be a base station, an access point, or a network device, or may be a device that communicates with a wireless terminal over an air interface in an access network by using one or more sectors. The network device may be configured to mutually convert a received over-the-air frame and an IP packet and serve as a router between a wireless terminal and a rest portion of an access network, where the rest portion of the access network may include an Internet protocol (IP) network. The network device may further coordinate attribute management of an air interface. For example, the access network device may be a base station (Base Transceiver Station, BTS) in a global system for mobile communications (Global System for Mobile communications, GSM) or code division multiple access (Code Division Multiple Access, CDMA), or may be a base station (NodeB, NB) in wideband code division multiple access (Wideband Code Division Multiple Access, WCDMA), or may be an evolved NodeB (evolved NodeB, eNB or eNodeB) in an LTE system, or may be a radio controller in a cloud radio access network (cloud radio access network, CRAN) scenario. Alternatively, the access device may be a relay station, an access point, a vehicle-mounted device, a wearable device, an access device in a 5G network, a network device in a future evolved PLMN network, or the like, may be an access point (access point, AP) in a WLAN, or may be a gNB in a new radio (new radio, NR) system. This is not limited in embodiments of this application. It should be noted that, in a 5G system, there may be one or more transmission reception points (Transmission Reception Point, TRP) on one base station. All TRPs belong to a same cell, and a measurement reporting method described in embodiments of this application may be used for each of the TRPs and the terminal. In another scenario, the network device may be further divided into a control unit (Control Unit, CU) and a data unit (Data Unit, DU). There may be a plurality of DUs under one CU. The measurement reporting method described in embodiments of this application may be used for each DU and the terminal. A difference between a CU-DU separation scenario and a multi-TRP scenario lies in that a TRP only serves as a radio unit or an antenna device, but a DU may implement a protocol stack function, for example, the DU may implement a physical layer function.

In addition, in embodiments of this application, the access network device is a device in an access network (radio access network, RAN), or in other words, a RAN node that connects the terminal device to a wireless network. For example, by way of example but not limitation, the access network device may be a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (base-band unit, BBU), a wireless fidelity (wireless fidelity, Wi-Fi) access point (access point, AP), or the like.

The access network device provides services for a cell. The terminal device communicates with the access network device by using a transmission resource (for example, a frequency domain resource, or in other words, a spectrum resource) used for the cell. The cell may be a cell corresponding to the access network device (for example, a base station), and the cell may belong to a macro base station, or may belong to a base station corresponding to a small cell (small cell). The small cell herein may include a metro cell (metro cell), a micro cell (micro cell), a pico cell (pico cell), a femto cell (femto cell), and the like. These small cells have features of small coverage and low transmit power, and are suitable for providing a high-rate data transmission service.

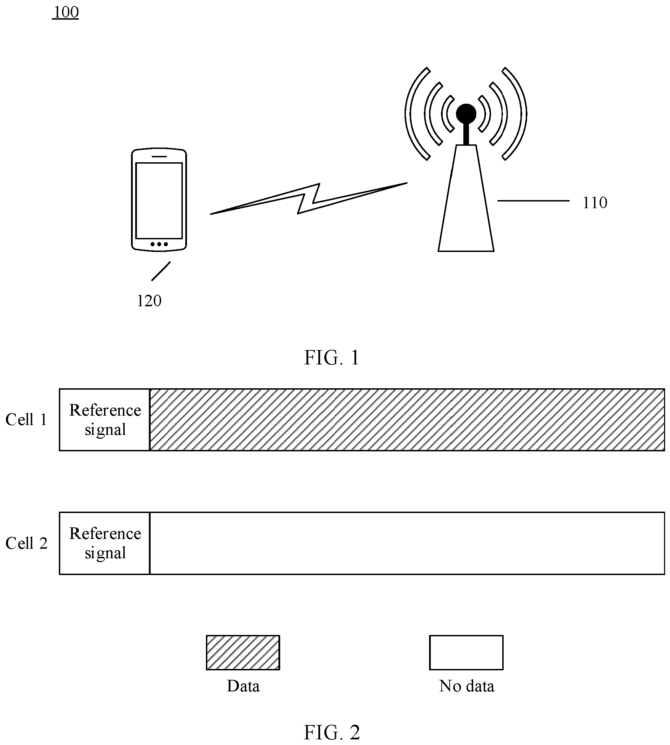

The following describes an application scenario in an embodiment of this application. FIG. 1 is a schematic diagram of an application scenario 100 according to an embodiment of this application. There are an access network device 110 and a terminal device 120 in FIG. 1. For example, the access network device 110 works in an evolved universal mobile telecommunications system terrestrial radio access (evolved UMTS terrestrial radio access, E-UTRA) system, or works in an NR system, or works in a next-generation communications system or another communications system. The access network device 110 may communicate with the terminal device 120 by using a Uu interface. In the communications system, the terminal device 120 may send uplink data to the access network device 110, and the access network device 110 may send downlink data to the terminal device 120.

In FIG. 1, the access network device is, for example, a base station. The access network device corresponds to different devices in different systems. For example, the access network device may correspond to an eNB in a 4G system, and correspond to a 5G access network device such as a gNB in a 5G system. The technical solutions provided in embodiments of this application may also be applied to a future mobile communications system. Therefore, the access network device in FIG. 1 may alternatively correspond to an access network device in the future mobile communications system. In FIG. 1, an example in which the access network device is a base station is used. Actually, for the access network device, refer to the foregoing descriptions.

It should be understood that the communications system shown in FIG. 1 may further include more network nodes, for example, another terminal device or another access network device. The access network devices or the terminal devices included in the communications system shown in FIG. 1 may be the foregoing access network devices or terminal devices in various forms. Details are not shown one by one in the figure in this embodiment of this application.

The technical solutions in this application may also be applied to another communications system. This is not limited in this application.

In both LTE and NR systems, CQIs are used to quantify downlink channel quality. The CQI has 16 values ranging from 0 to 15. A larger CQI value indicates better downlink channel quality. The CQI is obtained by UE through estimation based on a downlink reference signal received by the UE. The UE reports the estimated CQI to the base station, and the base station selects an appropriate MCS based on the CQI to schedule the UE.

The CQI is calculated by the UE. Both LTE and NR protocols do not specify a CQI calculation method. Terminal vendors select appropriate algorithms to calculate the CQI based on their understandings. Although the calculation methods of different vendors may be different, basic principles are the same. All are based on the Shannon theorem, as shown in Formula (1): $C = Blog 2 \left(1+S/N\right)$ (1)

C is a channel capacity, B is a spectrum bandwidth, and S/N is a signal-to-noise ratio. On a spectrum with a specific bandwidth, a channel capacity is related only to a signal-to-noise ratio on a channel. Therefore, to use a channel as much as possible, an amount of transmitted information needs to be adjusted to an upper limit of a channel capacity based on a signal-to-noise ratio on the channel. Therefore, calculating and reporting the CQI is actually calculating and reporting a signal to interference plus noise ratio (Signal to Interference plus Noise Ratio, SINR) of the UE. In the LTE system, a cell-specific reference signal (Cell-specific reference signal, CRS) is usually selected to calculate an SINR, and then the calculated SINR is mapped to a CQI value from 0 to 15. In the NR system, a channel state information reference signal (channel state information reference signal, CSI-RS) of the downlink reference signal is usually selected to calculate an SINR, and then the calculated SINR is mapped to a CQI value from 0 to 15.

After receiving the CQI value reported by the terminal device, the access network device selects parameters such as an appropriate modulation scheme, a code rate, and a transport block size based on the CQI value. For example, in the LTE system, a correspondence between a CQI, a modulation scheme, and a code rate is shown in Table 1.

**Table 1 Correspondence between a CQI index, a modulation scheme, a code rate, and efficiency**

| CQI index | Modulation scheme | Code rate | Efficiency |
|---|---|---|---|
| 0 | Out of range | | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

QPSK, 16QAM, and 64QAM in the table are different modulation schemes. QPSK, 16QAM, and 64QAM are quadrature phase shift keying (Quadrature Phase Shift Keying, QPSK), where one symbol represents 2 bits, 16 quadrature amplitude modulation (16 Quadrature Amplitude Modulation, 16QAM), where one symbol represents 4 bits, and 64 quadrature amplitude modulation (64 Quadrature Amplitude Modulation, 64QAM), where one symbol represents 6 bits, respectively.

The access network device usually processes the CQI reported by the UE in the following two manners:
(1) The CQI is mapped to an MCS for downlink scheduling. The base station maintains a mapping table between a CQI and an MCS, or a mapping rule. After obtaining a corresponding MCS based on the reported CQI, the base station directly uses the MCS to schedule the UE. A typical mapping relationship between a CQI and an MCS is shown in Formula (2): ${CQI}_{5} = \left\{\begin{matrix}0 , & {CQI}_{4} = 1 \\ 2 {CQI}_{4} - 4 , & 2 \leq {CQI}_{4} \leq 15\end{matrix}\right.$ (2)
(2) An outer-loop adjustment mechanism may be introduced. After obtaining an MCS to which the CQI is directly mapped, the access network device further adjusts the MCS based on feedback of an acknowledgment (Acknowledgment, ACK) or a negative acknowledgment (Negative Acknowledgment, NACK) and a demodulation result reported by the UE. Each time the access network device receives an ACK fed back by the UE, the access network device further adjusts the original MCS upward by a value. Correspondingly, each time the access network device receives a NACK, the access network device adjusts the original MCS downward by a value. An adjusted MCS is used as a final value for scheduling. In this way, a bit error rate of the UE can be controlled to an expected value.

The access network device directly maps the CQI to the MCS for downlink scheduling, and the directly mapped MCS may not achieve optimal performance. FIG. 2 is a schematic diagram of a scenario in which pilot signals of intra-frequency neighboring cells collide. The terminal device separately receives signals of two cells, and frequencies of the two cells are the same. A cell 1 is used as an example. There is neighboring cell interference at a pilot location of a signal sent in the cell 1, and a reference signal is also sent in a cell 2. The terminal device estimates, based on the downlink reference signal, that SINR=3, and correspondingly CQI=6. The terminal device reports the estimated CQI that is equal to 6 to the access network device. An MCS configured by the access network device for the UE is equal to 8. However, when a data signal is sent in the cell 1, no data signal is sent in the cell 2, so that no neighboring cell interference exists at a data location of the signal sent in the cell 1. In this case, SINR=16, and correspondingly CQI=11. Actually, the UE can demodulate, at the data location of the signal sent in the cell 1, a data block whose MCS is equal to 18. An appropriate MCS is not determined based on the CQI estimated based on the reference signal, resulting in a decrease of a throughput.

When MCS outer-loop adjustment is performed, the performance is not satisfactory in some scenarios. In the scenario shown in FIG. 2, although an outer loop increases the MCS of the UE, there are two problems:
(1) A convergence time period is long. When services burst or a UE channel changes greatly, MCS flapping may occur, affecting a delay and a throughput.
(2) Performance of an outer-loop algorithm is limited. It is difficult to accurately adjust the MCS when a CQI deviation is large.

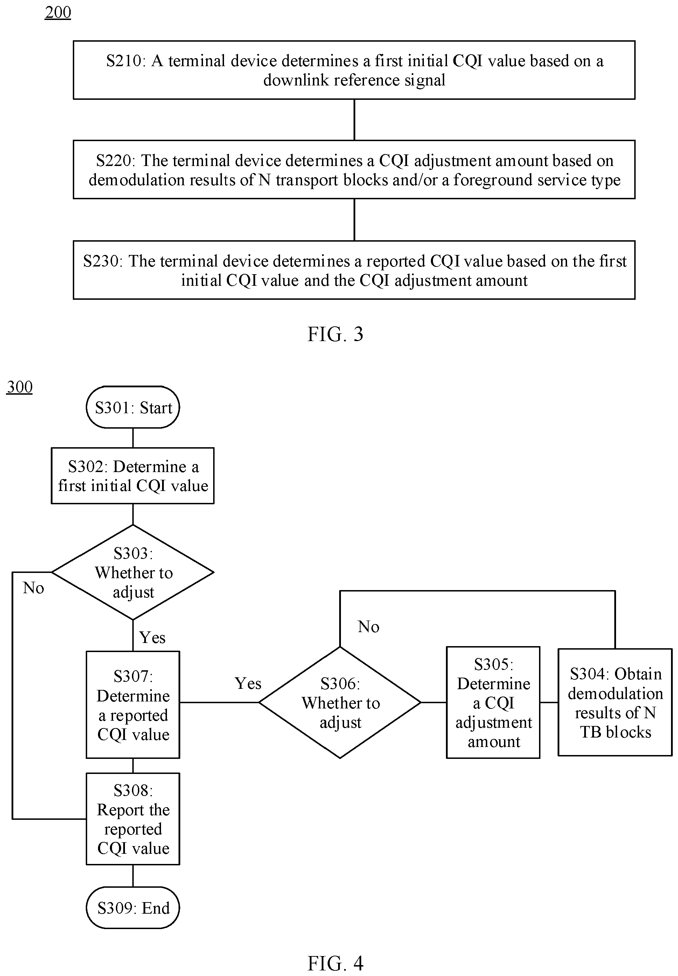

In view of this, this application provides a channel quality indicator CQI adjustment method. A channel quality indicator CQI adjustment method provided in this application is described below in detail with reference to FIG. 3. FIG. 3 is a schematic flowchart of a channel quality indicator CQI adjustment method 200 according to an embodiment of this application. The method 200 may be applied to the scenario shown in FIG. 1, or certainly may be applied to another communication scenario. This is not limited in embodiments of this application.

It should be further understood that, in this embodiment of this application, the method is described by using an example in which a terminal device performs the method. By way of example but not limitation, the method may alternatively be performed by a chip, a chip system, a processor, or the like used in the terminal device.

The method 200 shown in FIG. 3 may include S210 to S230. The following describes steps in the method 200 in detail with reference to FIG. 3.

S210: A terminal device determines a first initial CQI value based on a downlink reference signal.

S220: The terminal device determines a CQI adjustment amount based on demodulation results of N transport blocks and/or a foreground service type, where each transport block is used to transmit a data signal, and N is greater than or equal to 1.

S230: The terminal device determines a reported CQI value based on the first initial CQI value and the CQI adjustment amount, where the reported CQI value is a CQI value sent by the terminal device to an access network device.

Therefore, the terminal device determines the first initial CQI value based on the downlink reference signal, and then the terminal device determines the CQI adjustment amount based on the demodulation results of the N data transmission blocks and/or the foreground service type, and determines the reported CQI value based on the first initial CQI value and the CQI adjustment amount. This avoids inaccuracy of a selected MCS that occurs because only the downlink reference signal is used to determine the reported CQI value, and can further improve communication quality.

In an implementation, the determining a CQI adjustment amount based on demodulation results of N transport blocks includes: determining the CQI adjustment amount based on the demodulation results of the N decoded transport blocks and preset adjustment amounts corresponding to the demodulation results.

Specifically, in this implementation, the terminal device adjusts the first initial CQI value by using a current demodulation condition of the N transport blocks (Transport Blocks, TBs), and then reports an adjusted first initial CQI value. For a specific method, refer to FIG. 4. FIG. 4 is a schematic flowchart of a channel quality indicator CQI adjustment method 300 according to an embodiment of this application. The method 300 shown in FIG. 4 may include S301 to S309. The following describes steps in the method 300 in detail with reference to FIG. 4.

S301: A channel quality indicator CQI adjustment process starts.

S302: A terminal device determines a first initial CQI value based on a downlink reference signal.

S303: The terminal device determines whether the first initial CQI value needs to be adjusted.

In this step, the terminal device may determine, based on a service type and another factor, whether the first initial CQI value needs to be adjusted. If the terminal device determines that the first initial CQI value needs to be adjusted, step S307 is performed, and the terminal device determines a reported CQI value based on the first initial CQI value and a CQI adjustment amount. If the terminal device determines that the first initial CQI value does not need to be adjusted, step S308 is performed, and the terminal device reports the reported CQI value to an access network device.

S304: The terminal device obtains demodulation results of N TB blocks.

S305: The terminal device determines the CQI adjustment amount based on the demodulation results of the N transport blocks.

S306: The terminal device determines whether the first initial CQI value needs to be adjusted based on the CQI adjustment amount.

In this step, the terminal device may preset a reference value. If the CQI adjustment amount is greater than the preset reference value, the terminal device determines that the first initial CQI value needs to be adjusted based on the CQI adjustment amount, and proceeds to step S307. If the CQI adjustment amount is less than or equal to the preset reference value, the terminal device determines that the first initial CQI value does not need to be adjusted based on the CQI adjustment amount, and proceeds to step S304. For example, the reference value is 2. If the CQI adjustment amount obtained through calculation is greater than 2, the first initial CQI value needs to be adjusted. If the CQI adjustment amount obtained through calculation is less than or equal to 2, the first initial CQI value does not need to be adjusted.

S307: The terminal device determines the reported CQI value based on the first initial CQI value and the CQI adjustment amount.

S308: The terminal device reports the reported CQI value to the access network device.

S309: The channel quality indicator CQI adjustment process ends.

The foregoing method 300 generally describes the process in which the terminal device adjusts the first initial CQI value by using the current demodulation condition of the N transport blocks (Transport Blocks, TBs), and then reports the adjusted first initial CQI value. The following describes in detail how to determine the CQI adjustment amount based on the demodulation results of the N decoded transport blocks and preset adjustment amounts corresponding to the demodulation results.

In an implementation, the CQI adjustment amount may be determined according to Formula (3): $ΔCQI = a * n 1 - b * n 2$ (3)

a is a CQI adjustment amount for successful decoding, nl is a quantity of times for successful decoding, b is an adjustment amount for failed decoding, n2 is a quantity of times for failed decoding, and n1+n2=N.

In an implementation, the CQI adjustment amount may be determined according to Formula (4): $ΔCQI = f \left(k\right) = c * f \left(k-1\right) + d * Δ$ (4)

f(k) is an adjustment amount for the k^{th} scheduling, Δ is a preset adjustment amount corresponding to a previous demodulation result, and when demodulation succeeds, Δ=a, or when demodulation fails, Δ=-b.

After ΔCQI is calculated, the reported CQI value may be determined according to Formula (5): $CQI = CQInit + ΔCQI$ (5)

CQIinit is a first initial CQI value, and the result is rounded up as a final value and reported to the base station.

In an implementation, that the terminal device determines a CQI adjustment amount based on a foreground service type includes: determining a CQI adjustment policy based on the foreground service type; and determining the CQI adjustment amount according to the CQI adjustment policy.

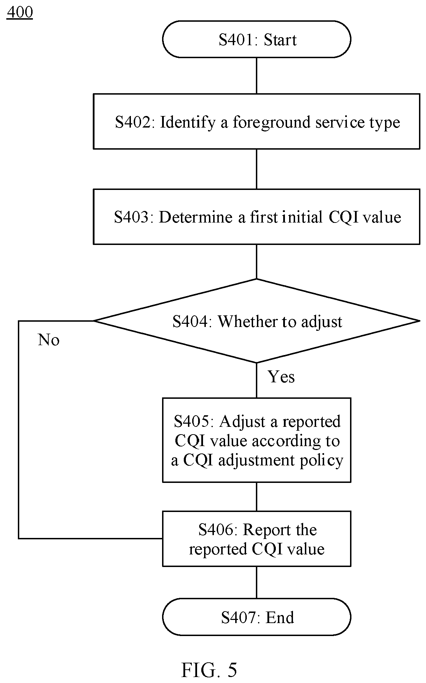

Specifically, in this implementation, the terminal device adjusts the first initial CQI value based on the foreground service type, and then reports an adjusted first initial CQI value. For a specific method, refer to FIG. 5. FIG. 5 is a schematic flowchart of a channel quality indicator CQI adjustment method 400 according to an embodiment of this application. The method 400 shown in FIG. 5 may include S401 to S407. The following describes steps in the method 400 in detail with reference to FIG. 5.

S401: A channel quality indicator CQI adjustment process starts.

S402: A terminal device identifies a foreground service type.

S403: The terminal device determines a first initial CQI value based on a downlink reference signal.

S404: The terminal device determines whether the first initial CQI value needs to be adjusted.

S405: When the first initial CQI value needs to be adjusted, the terminal device adjusts a reported CQI value according to a CQI adjustment policy.

S406: The terminal device reports the reported CQI value. It should be understood that the terminal device directly reports the first initial CQI value when the first initial CQI value does not need to be adjusted.

S407: The channel quality indicator CQI adjustment process ends.

The foregoing method 400 generally describes the process in which the terminal device adjusts the first initial value of the CQI based on the foreground service type and then reports the adjusted first initial CQI value. The following describes in detail how to determine, based on the foreground service type, the CQI adjustment policy to adjust the first initial CQI value.

In an implementation, when a service type of a current service is a delay-sensitive service, the CQI adjustment policy is changing a CQI value to a first preset value for reporting. Alternatively, when a service type of a current service is a delay-sensitive service, the CQI adjustment policy is as follows: if the first initial CQI value is greater than a first threshold, the reported CQI value is equal to the first initial CQI value minus the first threshold, or if the first initial CQI value is less than or equal to the first threshold, the reported CQI value is equal to a second preset value.

Specifically, an application layer of the terminal device identifies a service that is currently in the system foreground, and determines whether the service is a delay-sensitive service. If the service is a delay-sensitive service, an operating system of the terminal device indicates, by using an AT command or the like, a baseband chip modem to adjust a CQI estimation reporting policy; and reduces the reported CQI value according to different policies.

It should be understood that the first preset value, the second preset value, and the first threshold may be determined based on a specific service type.

For better understanding of this embodiment of this application, the following briefly describes two CQI adjustment policies by using examples.
(1) The reported CQI value is directly changed to 1 for reporting, where 1 is the first preset value.
(2) The first initial CQI value is denoted as a, and the reported value is b. If a>3, b=a-3; or If a<=3, b=1, where 3 is the first threshold, and 1 is the second preset value.

For example, the foreground service is a game service, and the service is a delay-sensitive service. Decoding errors need to be reduced and a delay needs to be shortened. Therefore, the CQI may be reduced to reduce decoding errors and shortens a delay.

Selecting an appropriate CQI reporting policy based on a foreground service can improve user experience.

In an implementation, that the terminal device may determine a CQI adjustment amount based on demodulation results of N transport blocks and a foreground service type includes: determining the CQI adjustment amount based on the demodulation results of the N decoded transport blocks and preset adjustment amounts corresponding to the demodulation results; determining a second initial CQI value based on the first initial CQI value and the CQI adjustment amount; determining a CQI adjustment policy based on the foreground service type; and determining a reported CQI value based on the second initial CQI value and the CQI adjustment policy.

For the determining a second initial CQI value based on the first initial CQI value and the CQI adjustment amount, refer to the related steps in the method 300; for the determining a CQI adjustment policy based on the foreground service type, refer to the related steps in the method 400. Details are not described herein again.

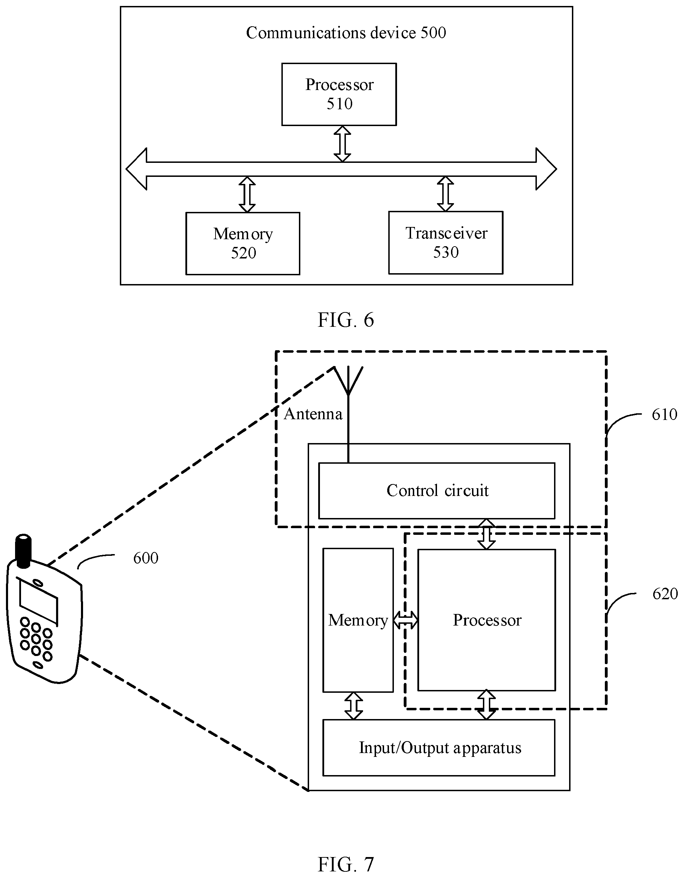

The foregoing describes in detail, with reference to FIG. 1 to FIG. 5, the methods for measuring a communication parameter of a multi-SIM terminal device according to embodiments of this application. The following describes in detail the communications apparatus in embodiments of this application with reference to FIG. 6 to FIG. 7.

FIG. 6 is a schematic block diagram of a communications apparatus 500 according to an embodiment of this application.

In some embodiments, the apparatus 500 may be a terminal device, or may be a chip or a circuit, for example, a chip or a circuit that may be disposed in the terminal device.

In a possible manner, the apparatus 500 may include a processing unit 510 (that is, an example of a processor) and a transceiver unit 530. In some possible implementations, the processing unit 510 may also be referred to as a determining unit. In some possible implementations, the transceiver unit 530 may include a receiving unit and a sending unit.

In an implementation, the transceiver unit 530 may be implemented by using a transceiver, a transceiver-related circuit, or an interface circuit.

In an implementation, the apparatus may further include a storage unit 520. In a possible manner, the storage unit 520 is configured to store instructions. In an implementation, the storage unit may be further configured to store data or information. The storage unit 520 may be implemented by using a memory.

In some possible designs, the processing unit 510 is configured to execute the instructions stored in the storage unit 520, so that the apparatus 500 is enabled to implement the steps performed by the terminal device in the foregoing method. Alternatively, the processing unit 510 may be configured to invoke the data in the storage unit 520, so that the apparatus 500 is enabled to implement the steps performed by the terminal device in the foregoing method.

In some possible designs, the processing unit 510 is configured to execute the instructions stored in the storage unit 520, so that the apparatus 500 is enabled to implement the steps performed by the access network device in the foregoing method. Alternatively, the processing unit 510 may be configured to invoke the data in the storage unit 520, so that the apparatus 500 is enabled to implement the steps performed by the access network device in the foregoing method.

For example, the processing unit 510, the storage unit 520, and the transceiver unit 530 may communicate with each other by using an internal connection path to transfer a control signal and/or a data signal. For example, the storage unit 520 is configured to store a computer program, and the processing unit 510 may be configured to invoke the computer program from the storage unit 520 and run the computer program, to control the transceiver unit 530 to receive a signal and/or send a signal, so that the steps performed by the terminal device or the access network device in the foregoing method are completed. The storage unit 520 may be integrated into the processing unit 510, or may be disposed separately from the processing unit 510.

Optionally, when the apparatus 500 is a communications device (for example, the terminal device or the access network device), the transceiver unit 530 includes a receiver and a transmitter. The receiver and the transmitter may be a same physical entity or different physical entities. When the receiver and the transmitter are a same physical entity, the receiver and the transmitter may be collectively referred to as a transceiver.

When the apparatus 500 is the terminal device, the transceiver unit 530 may be a sending unit or a transmitter when sending information, and the transceiver unit 530 may be a receiving unit or a receiver when receiving information. The transceiver unit may be a transceiver. The transceiver, the transmitter, or the receiver may be a radio frequency circuit. When the apparatus includes a storage unit, the storage unit is configured to store computer instructions. A processor is communicatively connected to a memory. The processor executes the computer instructions stored in the memory, so that the apparatus can perform the method 200, the method 500, or the method 600. The processor may be a general-purpose central processing unit (CPU), a microprocessor, or an application specific integrated circuit (Application Specific Integrated Circuit, ASIC).

Optionally, when the apparatus 500 is the chip or the circuit, the transceiver unit 530 includes an input interface and an output interface.

When the apparatus 500 is the chip, the transceiver unit 530 may be the input interface and/or the output interface, a pin, a circuit, or the like. The processing unit 510 may execute computer-executable instructions stored in the storage unit, so that the apparatus can perform the method 200, the method 500, or the method 600. Optionally, the storage unit is a storage unit in the chip, for example, a register or a buffer, or the storage unit may be a storage unit in the terminal but outside the chip, for example, a read-only memory (Read-Only Memory, ROM), another type of static storage device capable of storing static information and instructions, or a random access memory (Random Access Memory, RAM).

In an implementation, it may be considered that a function of the transceiver unit 530 is implemented by using a transceiver circuit or a dedicated transceiver chip. It may be considered that the processing unit 510 is implemented by using a dedicated processing chip, a processing circuit, a processing unit, or a general-purpose chip.

In another implementation, it may be considered that the communications device (for example, the terminal device or the access network device) provided in embodiments of this application is implemented by using a general-purpose computer. To be specific, program code for implementing functions of the processing unit 510 and the transceiver unit 530 is stored in the storage unit 520, and a general-purpose processing unit implements the functions of the processing unit 510 and the transceiver unit 530 by executing the code stored in the storage unit 520.

In some embodiments, the apparatus 500 may be a terminal device, or a chip or a circuit disposed in the terminal device. When the apparatus 500 is the terminal device, or the chip or the circuit disposed in the terminal device, the processing unit 510 is configured to determine a first initial CQI value based on a downlink reference signal; the processing unit 510 is further configured to determine a CQI adjustment amount based on demodulation results of N transport blocks and/or a foreground service type, where each transport block is used to transmit a data signal, and N is greater than or equal to 1; and the processing unit 510 is further configured to determine a reported CQI value based on the first initial CQI value and the CQI adjustment amount, where the reported CQI value is a CQI value sent by the terminal device to an access network device.

In an implementation, the processing unit 510 is specifically configured to determine the CQI adjustment amount based on the demodulation results of the N decoded transport blocks and preset adjustment amounts corresponding to the demodulation results.

In an implementation, the processing unit 510 is specifically configured to:
determine the CQI adjustment amount according to Formula (6): $ΔCQI = a * n 1 - b * n 2$ (6)
a is a CQI adjustment amount for successful decoding, nl is a quantity of times for successful decoding, b is an adjustment amount for failed decoding, n2 is a quantity of times for failed decoding, and n1+n2=N.

In an implementation, the processing unit 510 is specifically configured to:
determine the CQI adjustment amount according to Formula (7): $ΔCQI = f \left(k\right) = c * f \left(k-1\right) + d * Δ$ (7)

f(k) is an adjustment amount for the k^{th} scheduling, Δ is a preset adjustment amount corresponding to a previous demodulation result, and when demodulation succeeds, Δ=a; otherwise, Δ=-b.

In an implementation, the processing unit 510 is specifically configured to: determine a CQI adjustment policy based on the foreground service type; and determine the CQI adjustment amount according to the CQI adjustment policy.

In an implementation, the processing unit 510 is specifically configured to: when a service type of a current service is a delay-sensitive service, the CQI adjustment policy is changing a CQI value to a first preset value for reporting. Alternatively, when a service type of a current service is a delay-sensitive service, the CQI adjustment policy is as follows: if the first initial CQI value is greater than a first threshold, the reported CQI value is equal to the first initial CQI value minus the first threshold; or if the first initial CQI value is less than or equal to the first threshold, the reported CQI value is equal to a second preset value.

In an implementation, the processing unit 510 is specifically configured to: determine the CQI adjustment amount based on the demodulation results of the N decoded transport blocks and preset adjustment amounts corresponding to the demodulation results; determine a second initial CQI value based on the first initial CQI value and the CQI adjustment amount; determine a CQI adjustment policy based on the foreground service type; and determine a reported CQI value based on the second initial CQI value and the CQI adjustment policy.

In an implementation, the processing unit 510 is specifically configured to:
determine the CQI adjustment amount according to Formula (8): $ΔCQI = a * n 1 - b * n 2$ (8)

a is a CQI adjustment amount for successful decoding, n1 is a quantity of times for successful decoding, b is an adjustment amount for failed decoding, n2 is a quantity of times for failed decoding, and n1+n2=N.

In an implementation, the processing unit 510 is specifically configured to:
determine the CQI adjustment amount according to Formula (9): $ΔCQI = f \left(k\right) = c * f \left(k-1\right) + d * Δ$ (9)

f(k) is an adjustment amount for the k^{th} scheduling, Δ is a preset adjustment amount corresponding to a previous demodulation result, and when demodulation succeeds, Δ=a; otherwise, Δ=-b.

In an implementation, the processing unit 510 is specifically configured to: when a service type of a current service is a delay-sensitive service, the CQI adjustment policy is changing a CQI value to a first preset value for reporting. Alternatively, when a service type of a current service is a delay-sensitive service, the CQI adjustment policy is as follows: if the first initial CQI value is greater than a first threshold, the reported CQI value is equal to the first initial CQI value minus the first threshold, or if the first initial CQI value is less than or equal to the first threshold, the reported CQI value is equal to a second preset value.

When the apparatus 500 is configured in the terminal device or is the terminal device, the modules or the units in the apparatus 500 may be configured to perform the actions or the processing processes performed by the first terminal device in the foregoing methods. To avoid repetition, detailed descriptions are omitted herein.

FIG. 7 is a schematic diagram of a structure of a terminal device 600 according to this application. The terminal device 600 may perform the actions performed by the terminal device in the foregoing method embodiment.

For ease of description, FIG. 7 shows only main components of the terminal device. As shown in FIG. 7, the terminal device 600 includes a processor, a memory, a control circuit, an antenna, and an input/output apparatus.

The processor is mainly configured to process a communication protocol and communication data, control the entire terminal device, execute a software program, and process data of the software program, for example, is configured to support the terminal device in performing the actions described in the foregoing embodiment of the indication method for transmitting a precoding matrix. The memory is mainly configured to store the software program and the data, for example, store a codebook described in the foregoing embodiment. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, for example, a touchscreen, a display, a keyboard, is mainly configured to: receive data entered by a user and output data to the user.

After the terminal device is powered on, the processor may read the software program in the storage unit, interpret and execute instructions of the software program, and process data of the software program. When data needs to be sent in a wireless manner, after performing baseband processing on to-be-sent data, the processor outputs a baseband signal to a radio frequency circuit. After performing radio frequency processing on the baseband signal, the radio frequency circuit sends a processed radio frequency signal in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 7 shows only one memory and one processor. In an actual terminal device, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal device, execute the software program, and process the data of the software program. The processor in FIG. 7 integrates functions of the baseband processor and the central processing unit. A person skilled in the art may understand that the baseband processor and the central processing unit may be independent processors, and are interconnected by using technologies such as a bus. A person skilled in the art may understand that the terminal device may include a plurality of baseband processors to adapt to different network standards, and the terminal device may include a plurality of central processing units to improve a processing capability of the terminal device, and the components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna and the control circuit that have receiving and sending functions may be considered as a transceiver unit 610 of the terminal device 600, and the processor that has a processing function may be considered as a processing unit 620 of the terminal device 600. As shown in FIG. 7, the terminal device 600 includes the transceiver unit 610 and the processing unit 620. The transceiver unit may also be referred to as a transceiver machine, a transceiver, a transceiver apparatus, or the like. Optionally, a component that is in the transceiver unit 610 and that is configured to implement a receiving function may be considered as a receiving unit, and a component that is in the transceiver unit 610 and that is configured to implement a sending function may be considered as a sending unit. In other words, the transceiver unit includes a receiving unit and a sending unit. For example, the receiving unit may also be referred to as a receiver, a receive machine, or a receiving circuit, and the sending unit may also be referred to as a transmitter, a transmit machine, or a transmitting circuit.

It should be understood that, the processor in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitation, random access memories (random access memories, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware, firmware, or any combination thereof. When software is used to implement embodiments, all or some of the foregoing embodiments may be in a form of a computer program product. The computer program product includes one or more computer instructions or computer programs. When the program instructions or the computer programs are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

An embodiment of this application further provides a computer-readable medium, and the computer-readable medium stores a computer program. When the computer program is executed by a computer, the steps performed by the terminal device in any one of the foregoing embodiments is implemented.

An embodiment of this application further provides a computer program product. When the computer program product is executed by a computer, the steps performed by the terminal device in any one of the foregoing embodiments is implemented.

An embodiment of this application further provides a system chip. The system chip includes a communications unit and a processing unit. The processing unit may be, for example, a processor. The communications unit may be, for example, a communications interface, an input/output interface, a pin, a circuit, or the like. The processing unit may execute computer instructions, so that the chip in the communications apparatus performs the steps performed by the terminal device provided in the foregoing embodiments of this application.

Optionally, the computer instructions are stored in a storage unit.

Embodiments in this application may be used independently, or may be used jointly. This is not limited herein.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD), a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include, and/or carry instructions and/or data.

It should be understood that the term "and/or" describes an association relationship between associated objects, and represents that three relationships may exist. For example, A and/or B may represent the following three cases: Only A exists, both A and B exist, and only B exists. The character "/" usually represents an "or" relationship between the associated objects. The term "at least one" means one or more. The term "at least one of A and B", similar to the term "A and/or B", describes an association relationship between the associated objects and represents that three relationships may exist. For example, at least one of A and B may represent the following three cases: Only A exists, both A and B exist, and only B exists.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatuses, and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Therefore, the protection scope of this application shall be subject to the protection scope of the claims.

## Claims

1. A channel quality indicator CQI adjustment method (200, 300, 400), wherein the method is performed by a terminal device and comprises:
determining (S210, S302, S403) a first initial CQI value based on a downlink reference signal;
determining a CQI adjustment amount based on a foreground service type; and
determining (S230, S307) a reported CQI value based on the first initial CQI value and the CQI adjustment amount, wherein the reported CQI value is a CQI value sent by the terminal device to an access network device,
wherein the determining a CQI adjustment amount based on a foreground service type comprises:
when an application layer of the terminal device identifies a service that is currently in a system foreground and determines whether the service is a delay-sensitive service,
determining (S405) a CQI adjustment policy based on the foreground service type; and
determining (S405) the CQI adjustment amount according to the CQI adjustment policy.

2. The method (200, 300, 400) according to claim 1, wherein the determining (S405) a CQI adjustment policy based on the foreground service type comprises:
when a service type of a current service is a delay-sensitive service, the CQI adjustment policy is changing a CQI value to a first preset value for reporting; or
when a service type of a current service is a delay-sensitive service, the CQI adjustment policy is as follows:
if the first initial CQI value is greater than a first threshold, the reported CQI value is equal to the first initial CQI value minus the first threshold, or if the first initial CQI value is less than or equal to the first threshold, the reported CQI value is equal to a second preset value.

3. The method (200, 300, 400) according to claim 1, wherein the determination of the CQI adjustment amount is further based on demodulation results of N transport blocks, wherein each transport block is used to transmit a data signal, N is greater than or equal to 1, and wherein the determining the CQI adjustment amount based on the demodulation results of N transport blocks and the foreground service type comprises:
determining (S305) the CQI adjustment amount based on the demodulation results of the N decoded transport blocks and preset adjustment amounts corresponding to the demodulation results;
determining a second initial CQI value based on the first initial CQI value and the CQI adjustment amount; and
determining the reported CQI value based on the second initial CQI value and the CQI adjustment policy.

4. The method (200, 300, 400) according to claim 3, wherein the determining (S305) the CQI adjustment amount based on the demodulation results of the N decoded transport blocks and preset adjustment amounts corresponding to the demodulation results comprises:
determining the CQI adjustment amount according to Formula (3): $ΔCQI = a * n 1 - b * n 2$ (3), wherein
a is a CQI adjustment amount for successful decoding, n1 is a quantity of times for successful decoding, b is an adjustment amount for failed decoding, n2 is a quantity of times for failed decoding, and n1+n2=N.

5. The method (200, 300, 400) according to claim 3, wherein the determining (S305) the CQI adjustment amount based on the demodulation results of the N decoded transport blocks and preset adjustment amounts corresponding to the demodulation results comprises:
determining the CQI adjustment amount according to Formula (4): $ΔCQI = f \left(k\right) = c * f \left(k-1\right) + d * Δ$ (4), wherein
f(k) is an adjustment amount for the k^{th} scheduling, Δ is a preset adjustment amount corresponding to a previous demodulation result, and when demodulation succeeds, Δ=a, or when demodulation fails, Δ=-b.

6. The method (200, 300, 400) according to any one of claims 3 to 5, wherein the determining a CQI adjustment policy based on the foreground service type comprises:
when a service type of a current service is a delay-sensitive service, the CQI adjustment policy is changing a CQI value to a first preset value for reporting; or
when a service type of a current service is a delay-sensitive service, the CQI adjustment policy is as follows:
if the first initial CQI value is greater than a first threshold, the reported CQI value is equal to the first initial CQI value minus the first threshold, or if the first initial CQI value is less than or equal to the first threshold, the reported CQI value is equal to a second preset value.

7. A terminal device (600), comprising:
a processing unit (620), configured to determine a first initial CQI value based on a downlink reference signal, wherein
the processing unit (620) is further configured to determine a CQI adjustment amount based on a foreground service type; and
the processing unit (620) is further configured to determine a reported CQI value based on the first initial CQI value and the CQI adjustment amount, wherein the reported CQI value is a CQI value sent by the terminal device to an access network device,
wherein the processing unit (620) is specifically configured to:
when an application layer of the terminal device identifies a service that is currently in a system foreground and determines whether the service is a delay-sensitive service,
determine a CQI adjustment policy based on the foreground service type; and
determine the CQI adjustment amount according to the CQI adjustment policy.

8. The terminal device (600) according to claim 7, wherein the processing unit (620) is specifically configured to:
when a service type of a current service is a delay-sensitive service, the CQI adjustment policy is changing a CQI value to a first preset value for reporting; or
when a service type of a current service is a delay-sensitive service, the CQI adjustment policy is as follows:
if the first initial CQI value is greater than a first threshold, the reported CQI value is equal to the first initial CQI value minus the first threshold, or if the first initial CQI value is less than or equal to the first threshold, the reported CQI value is equal to a second preset value.

9. The terminal device (600) according to claim 7, wherein the processing unit (620) is specifically configured to:
determine the CQI adjustment amount further based the demodulation results of the N decoded transport blocks and preset adjustment amounts corresponding to the demodulation results, wherein each transport block is used to transmit a data signal, N is greater than or equal to 1;
determine a second initial CQI value based on the first initial CQI value and the CQI adjustment amount; and
determine the reported CQI value based on the second initial CQI value and the CQI adjustment policy.

10. The terminal device (600) according to claim 9, wherein the processing unit (620) is specifically configured to:
determine the CQI adjustment amount according to Formula (7): $ΔCQI = a * n 1 - b * n 2$ (7), wherein
a is a CQI adjustment amount for successful decoding, n1 is a quantity of times for successful decoding, b is an adjustment amount for failed decoding, n2 is a quantity of times for failed decoding, and n1+n2=N.

11. The terminal device (600) according to claim 9, wherein the processing unit (620) is specifically configured to:
determine the CQI adjustment amount according to Formula (8): $ΔCQI = f \left(k\right) = c * f \left(k-1\right) + d * Δ$ (8), wherein
f(k) is an adjustment amount for the k^{th} scheduling, Δ is a preset adjustment amount corresponding to a previous demodulation result, and when demodulation succeeds, Δ=a, or when demodulation fails, Δ=-b.

12. The terminal device (600) according to any one of claims 9 to 11, wherein the processing unit (620) is specifically configured to:
when a service type of a current service is a delay-sensitive service, the CQI adjustment policy is changing a CQI value to a first preset value for reporting; or
when a service type of a current service is a delay-sensitive service, the CQI adjustment policy is as follows:
if the first initial CQI value is greater than a first threshold, the reported CQI value is equal to the first initial CQI value minus the first threshold, or if the first initial CQI value is less than or equal to the first threshold, the reported CQI value is equal to a second preset value.

13. A computer-readable storage medium, wherein the computer-readable storage medium stores a computer program, and when the computer program is run, on a terminal device,
the method according to any one of claims 1 to 6 is implemented.

## Patentansprüche

1. Kanalqualitätsindikator- bzw. CQI-Anpassungsverfahren (200, 300, 400), wobei das Verfahren durch eine Endgerätevorrichtung durchgeführt wird und Folgendes umfasst:
Bestimmen (S210, S302, S403) eines ersten anfänglichen CQI-Werts basierend auf einem Downlink-Referenzsignal;
Bestimmen eines CQI-Anpassungsbetrags basierend auf einem Vordergrunddiensttyp; und
Bestimmen (S230, S307) eines gemeldeten CQI-Werts basierend auf dem ersten anfänglichen CQI-Wert und dem CQI-Anpassungsbetrag, wobei der gemeldete CQI-Wert ein CQI-Wert ist, der durch die Endgerätevorrichtung an eine Zugangsnetzwerkvorrichtung gesendet wird,
wobei das Bestimmen eines CQI-Anpassungsbetrags basierend auf einem Vordergrunddiensttyp Folgendes umfasst:
wenn eine Anwendungsschicht der Endgerätevorrichtung einen Dienst identifiziert, der sich derzeit in einem Systemvordergrund befindet, und bestimmt, ob der Dienst ein verzögerungsempfindlicher Dienst ist,
Bestimmen (S405) einer CQI-Anpassungsrichtlinie basierend auf dem Vordergrunddiensttyp; und
Bestimmen (S405) des CQI-Anpassungsbetrags gemäß der CQI-Anpassungsrichtlinie.

2. Verfahren (200, 300, 400) nach Anspruch 1, wobei das Bestimmen (S405) einer CQI-Anpassungsrichtlinie basierend auf dem Vordergrunddiensttyp Folgendes umfasst:
wenn ein Diensttyp eines aktuellen Dienstes ein verzögerungsempfindlicher Dienst ist, ändert die CQI-Anpassungsrichtlinie einen CQI-Wert zu einem ersten voreingestellten Wert für die Berichterstattung; oder
wenn ein Diensttyp eines aktuellen Dienstes ein verzögerungsempfindlicher Dienst ist, ist die CQI-Anpassungsrichtlinie wie folgt:
falls der erste anfängliche CQI-Wert größer als ein erster Schwellenwert ist, ist der gemeldete CQI-Wert gleich dem ersten anfänglichen CQI-Wert minus dem ersten Schwellenwert, oder falls der erste anfängliche CQI-Wert kleiner oder gleich dem ersten Schwellenwert ist, ist der gemeldete CQI-Wert gleich einem zweiten voreingestellten Wert.

3. Verfahren (200, 300, 400) nach Anspruch 1, wobei die Bestimmung des CQI-Anpassungsbetrags ferner auf Demodulationsergebnissen von N Transportblöcken basiert, wobei jeder Transportblock zum Übertragen eines Datensignals verwendet wird, N größer oder gleich 1 ist, und wobei das Bestimmen des CQI-Anpassungsbetrags basierend auf den Demodulationsergebnissen von N Transportblöcken und dem Vordergrunddiensttyp Folgendes umfasst:
Bestimmen (S305) des CQI-Anpassungsbetrags basierend auf den Demodulationsergebnissen der N decodierten Transportblöcke und voreingestellten Anpassungsbeträgen, die den Demodulationsergebnissen entsprechen;
Bestimmen eines zweiten anfänglichen CQI-Werts basierend auf dem ersten anfänglichen CQI-Wert und dem CQI-Anpassungsbetrag; und
Bestimmen des gemeldeten CQI-Werts basierend auf dem zweiten anfänglichen CQI-Wert und der CQI-Anpassungsrichtlinie.

4. Verfahren (200, 300, 400) nach Anspruch 3, wobei das Bestimmen (S305) des CQI-Anpassungsbetrags basierend auf den Demodulationsergebnissen der N decodierten Transportblöcke und voreingestellten Anpassungsbeträgen, die den Demodulationsergebnissen entsprechen, Folgendes umfasst:
Bestimmen des CQI-Anpassungsbetrags gemäß Formel (3): $ΔCQI = a * n 1 - b * n 2$ wobei
a ein CQI-Anpassungsbetrag für erfolgreiches Decodieren ist, n1 eine Anzahl von Malen für erfolgreiches Decodieren ist, b ein Anpassungsbetrag für fehlgeschlagenes Decodieren ist, n2 eine Anzahl von Malen für fehlgeschlagenes Decodieren ist und n1+n2=N.

5. Verfahren (200, 300, 400) nach Anspruch 3, wobei das Bestimmen (S305) des CQI-Anpassungsbetrags basierend auf den Demodulationsergebnissen der N decodierten Transportblöcke und voreingestellten Anpassungsbeträgen, die den Demodulationsergebnissen entsprechen, Folgendes umfasst:
Bestimmen des CQI-Anpassungsbetrags gemäß Formel (4): $ΔCQI = f \left(k\right) = c * f \left(k-1\right) + d * Δ$ wobei
f(k) ein Anpassungsbetrag für das k-te Scheduling ist, Δ ein voreingestellter Anpassungsbetrag ist, der einem vorherigen Demodulationsergebnis entspricht, und wenn eine Demodulation erfolgreich ist, Δ=a, oder wenn eine Demodulation fehlschlägt, Δ=-b.

6. Verfahren (200, 300, 400) nach einem der Ansprüche 3 bis 5, wobei das Bestimmen einer CQI-Anpassungsrichtlinie basierend auf dem Vordergrunddiensttyp Folgendes umfasst:
wenn ein Diensttyp eines aktuellen Dienstes ein verzögerungsempfindlicher Dienst ist, ändert die CQI-Anpassungsrichtlinie einen CQI-Wert zu einem ersten voreingestellten Wert für die Berichterstattung; oder
wenn ein Diensttyp eines aktuellen Dienstes ein verzögerungsempfindlicher Dienst ist, ist die CQI-Anpassungsrichtlinie wie folgt:
falls der erste anfängliche CQI-Wert größer als ein erster Schwellenwert ist, ist der gemeldete CQI-Wert gleich dem ersten anfänglichen CQI-Wert minus dem ersten Schwellenwert, oder falls der erste anfängliche CQI-Wert kleiner oder gleich dem ersten Schwellenwert ist, ist der gemeldete CQI-Wert gleich einem zweiten voreingestellten Wert.

7. Endgerätevorrichtung (600), die Folgendes umfasst:
eine Verarbeitungseinheit (620), die dazu ausgelegt ist, einen ersten anfänglichen CQI-Wert basierend auf einem Downlink-Referenzsignal zu bestimmen, wobei
die Verarbeitungseinheit (620) ferner dazu ausgelegt ist, einen CQI-Anpassungsbetrag basierend auf einem Vordergrunddiensttyp zu bestimmen; und
die Verarbeitungseinheit (620) ferner dazu ausgelegt ist, einen gemeldeten CQI-Wert basierend auf dem ersten anfänglichen CQI-Wert und dem CQI-Anpassungsbetrag zu bestimmen, wobei der gemeldete CQI-Wert ein CQI-Wert ist, der durch die Endgerätevorrichtung an eine Zugangsnetzwerkvorrichtung gesendet wird,
wobei ist die Verarbeitungseinheit (620) spezifisch ausgelegt ist zum:
wenn eine Anwendungsschicht der Endgerätevorrichtung einen Dienst identifiziert, der sich derzeit in einem Systemvordergrund befindet, und bestimmt, ob der Dienst ein verzögerungsempfindlicher Dienst ist,
Bestimmen einer CQI-Anpassungsrichtlinie basierend auf dem Vordergrunddiensttyp; und
Bestimmen des CQI-Anpassungsbetrags gemäß der CQI-Anpassungsrichtlinie.

8. Endgerätevorrichtung (600) nach Anspruch 7, wobei die Verarbeitungseinheit (620) spezifisch ausgelegt ist zum:
wenn ein Diensttyp eines aktuellen Dienstes ein verzögerungsempfindlicher Dienst ist, ändert die CQI-Anpassungsrichtlinie einen CQI-Wert zu einem ersten voreingestellten Wert für die Berichterstattung; oder
wenn ein Diensttyp eines aktuellen Dienstes ein verzögerungsempfindlicher Dienst ist, ist die CQI-Anpassungsrichtlinie wie folgt:
falls der erste anfängliche CQI-Wert größer als ein erster Schwellenwert ist, ist der gemeldete CQI-Wert gleich dem ersten anfänglichen CQI-Wert minus dem ersten Schwellenwert, oder falls der erste anfängliche CQI-Wert kleiner oder gleich dem ersten Schwellenwert ist, ist der gemeldete CQI-Wert gleich einem zweiten voreingestellten Wert.

9. Endgerätevorrichtung (600) nach Anspruch 7, wobei die Verarbeitungseinheit (620) spezifisch ausgelegt ist zum:
Bestimmen des CQI-Anpassungsbetrags ferner basierend auf den Demodulationsergebnissen der N decodierten Transportblöcke und voreingestellten Anpassungsbeträgen, die den Demodulationsergebnissen entsprechen, wobei jeder Transportblock verwendet wird, um ein Datensignal zu übertragen, wobei N größer oder gleich 1 ist;
Bestimmen eines zweiten anfänglichen CQI-Werts basierend auf dem ersten anfänglichen CQI-Wert und dem CQI-Anpassungsbetrag; und
Bestimmen des gemeldeten CQI-Werts basierend auf dem zweiten anfänglichen CQI-Wert und der CQI-Anpassungsrichtlinie.

10. Endgerätevorrichtung (600) nach Anspruch 9, wobei die Verarbeitungseinheit (620) spezifisch ausgelegt ist zum:
Bestimmen des CQI-Anpassungsbetrags gemäß Formel (7): $ΔCQI = a * n 1 - b * n 2$ (7), wobei
a ein CQI-Anpassungsbetrag für erfolgreiches Decodieren ist, n1 eine Anzahl von Malen für erfolgreiches Decodieren ist, b ein Anpassungsbetrag für fehlgeschlagenes Decodieren ist, n2 eine Anzahl von Malen für fehlgeschlagenes Decodieren ist und n1+n2=N.

11. Endgerätevorrichtung (600) nach Anspruch 9, wobei die Verarbeitungseinheit (620) spezifisch ausgelegt ist zum:
Bestimmen des CQI-Anpassungsbetrags gemäß Formel (8): $ΔCQI = f \left(k\right) = c * f \left(k-1\right) + d * Δ$ (8), wobei
f(k) ein Anpassungsbetrag für das k-te Scheduling ist, Δ ein voreingestellter Anpassungsbetrag ist, der einem vorherigen Demodulationsergebnis entspricht, und wenn eine Demodulation erfolgreich ist, Δ=a, oder wenn eine Demodulation fehlschlägt, Δ=-b.

12. Endgerätevorrichtung (600) nach einem der Ansprüche 9 bis 11, wobei die Verarbeitungseinheit (620) spezifisch ausgelegt ist zum:
wenn ein Diensttyp eines aktuellen Dienstes ein verzögerungsempfindlicher Dienst ist, ändert die CQI-Anpassungsrichtlinie einen CQI-Wert zu einem ersten voreingestellten Wert für die Berichterstattung; oder
wenn ein Diensttyp eines aktuellen Dienstes ein verzögerungsempfindlicher Dienst ist, ist die CQI-Anpassungsrichtlinie wie folgt:
falls der erste anfängliche CQI-Wert größer als ein erster Schwellenwert ist, ist der gemeldete CQI-Wert gleich dem ersten anfänglichen CQI-Wert minus dem ersten Schwellenwert, oder falls der erste anfängliche CQI-Wert kleiner oder gleich dem ersten Schwellenwert ist, ist der gemeldete CQI-Wert gleich einem zweiten voreingestellten Wert.

13. Computerlesbares Speichermedium, wobei das computerlesbare Speichermedium ein Computerprogramm speichert und, wenn das Computerprogramm auf einer Endgerätevorrichtung ausgeführt wird, das Verfahren nach einem der Ansprüche 1 bis 6 implementiert wird.

## Revendications

1. Procédé (200, 300, 400) d'ajustement d'indicateur de qualité de canal CQI, dans lequel le procédé est réalisé par un dispositif terminal et comprend :
la détermination (S210, S302, S403) d'une première valeur de CQI initiale sur la base d'un signal de référence de liaison descendante ;
la détermination d'une quantité d'ajustement de CQI sur la base d'un type de service d'avant-plan ; et
la détermination (S230, S307) d'une valeur de CQI rapportée sur la base de la première valeur de CQI initiale et de la quantité d'ajustement de CQI, la valeur de CQI rapportée étant une valeur de CQI envoyée par le dispositif terminal à un dispositif de réseau d'accès,
dans lequel la détermination d'une quantité d'ajustement de CQI sur la base d'un type de service d'avant-plan comprend :
lorsqu'une couche d'application du dispositif terminal identifie un service qui se trouve actuellement dans un avant-plan de système et détermine si le service est ou non un service sensible au retard,
la détermination (S405) d'une politique d'ajustement de CQI sur la base du type de service d'avant-plan ; et
la détermination (S405) de la quantité d'ajustement de CQI conformément à la politique d'ajustement de CQI.

2. Procédé (200, 300, 400) selon la revendication 1, dans lequel la détermination (S405) d'une politique d'ajustement de CQI sur la base du type de service d'avant-plan comprend :
lorsqu'un type de service d'un service en cours est un service sensible au retard, la politique d'ajustement de CQI modifie une valeur de CQI en une première valeur prédéfinie pour le rapport ; ou
lorsqu'un type de service d'un service en cours est un service sensible au retard, la politique d'ajustement de CQI est la suivante :
si la première valeur de CQI initiale est supérieure à un premier seuil, la valeur de CQI rapportée est égale à la première valeur de CQI initiale moins le premier seuil, ou si la première valeur de CQI initiale est inférieure ou égale au premier seuil, la valeur de CQI rapportée est égale à une deuxième valeur prédéterminée.

3. Procédé (200, 300, 400) selon la revendication 1, dans lequel la détermination de la quantité d'ajustement de CQI est en outre basée sur des résultats de démodulation de N blocs de transport, chaque bloc de transport étant utilisé pour transmettre un signal de données, N étant supérieur ou égal à 1, et la détermination de la quantité d'ajustement de CQI sur la base des résultats de démodulation de N blocs de transport et le type de service d'avant-plan comprenant :
la détermination (S305) de la quantité d'ajustement de CQI sur la base des résultats de démodulation des N blocs de transport décodés et de quantités d'ajustement prédéterminées correspondant aux résultats de démodulation ;
la détermination d'une deuxième valeur de CQI initiale sur la base de la première valeur de CQI initiale et de la quantité d'ajustement de CQI ; et
la détermination de la valeur de CQI rapportée sur la base de la deuxième valeur de CQI initiale et de la politique d'ajustement de CQI.

4. Procédé (200, 300, 400) selon la revendication 3, dans lequel la détermination (S305) de la quantité d'ajustement de CQI sur la base des résultats de démodulation des N blocs de transport décodés et de quantités d'ajustement prédéterminées correspondant aux résultats de démodulation comprend :
la détermination de la quantité d'ajustement de CQI selon la Formule (3) : $ΔCQI = a * n 1 - b * n 2$ (3), , dans laquelle
a est une quantité d'ajustement de CQI pour un décodage réussi, n1 est une quantité de fois pour un décodage réussi, b est une quantité d'ajustement pour un décodage échoué, n2 est une quantité de fois pour un décodage échoué, et n1+n2=N.

5. Procédé (200, 300, 400) selon la revendication 3, dans lequel la détermination (S305) de la quantité d'ajustement de CQI sur la base des résultats de démodulation des N blocs de transport décodés et de quantités d'ajustement prédéterminées correspondant aux résultats de démodulation comprend :
la détermination de la quantité d'ajustement de CQI selon la Formule (4) : $ΔCQI = f \left(k\right) = c * f \left(k-1\right) + d * Δ$ (4), , dans laquelle
f(k) est une quantité d'ajustement pour le k^{e} ordonnancement, Δ est une quantité d'ajustement prédéfinie correspondant à un résultat de démodulation précédent, et lorsque la démodulation réussit, Δ=a, ou lorsque la démodulation échoue, Δ=-b.

6. Procédé (200, 300, 400) selon l'une quelconque des revendications 3 à 5, dans lequel la détermination d'une politique d'ajustement de CQI sur la base du type de service d'avant-plan comprend :
lorsqu'un type de service d'un service en cours est un service sensible au retard, la politique d'ajustement de CQI modifie une valeur de CQI en une première valeur prédéfinie pour le rapport ; ou
lorsqu'un type de service d'un service en cours est un service sensible au retard, la politique d'ajustement de CQI est la suivante :
si la première valeur de CQI initiale est supérieure à un premier seuil, la valeur de CQI rapportée est égale à la première valeur de CQI initiale moins le premier seuil, ou si la première valeur de CQI initiale est inférieure ou égale au premier seuil, la valeur de CQI rapportée est égale à une deuxième valeur prédéterminée.

7. Dispositif terminal (600), comprenant :
une unité de traitement (620), configurée pour déterminer une première valeur de CQI initiale sur la base d'un signal de référence de liaison descendante,
l'unité de traitement (620) étant en outre configurée pour déterminer une quantité d'ajustement de CQI sur la base d'un type de service d'avant-plan ; et
l'unité de traitement (620) étant en outre configurée pour déterminer une valeur de CQI rapportée sur la base de la première valeur de CQI initiale et de la quantité d'ajustement de CQI, la valeur de CQI rapportée étant une valeur de CQI envoyée par le dispositif terminal à un dispositif de réseau d'accès,
dans lequel l'unité de traitement (620) est spécifiquement configurée pour :
lorsqu'une couche d'application du dispositif terminal identifie un service qui se trouve actuellement dans un avant-plan de système et détermine si le service est ou non un service sensible au retard,
déterminer une politique d'ajustement de CQI sur la base du type de service d'avant-plan ; et
déterminer la quantité d'ajustement de CQI conformément à la politique d'ajustement de CQI.

8. Dispositif terminal (600) selon la revendication 7, dans lequel l'unité de traitement (620) est spécifiquement configurée pour :
lorsqu'un type de service d'un service en cours est un service sensible au retard, la politique d'ajustement de CQI modifie une valeur de CQI en une première valeur prédéfinie pour le rapport ; ou
lorsqu'un type de service d'un service en cours est un service sensible au retard, la politique d'ajustement de CQI est la suivante :
si la première valeur de CQI initiale est supérieure à un premier seuil, la valeur de CQI rapportée est égale à la première valeur de CQI initiale moins le premier seuil, ou si la première valeur de CQI initiale est inférieure ou égale au premier seuil, la valeur de CQI rapportée est égale à une deuxième valeur prédéterminée.

9. Dispositif terminal (600) selon la revendication 7, dans lequel l'unité de traitement (620) est spécifiquement configurée pour :
déterminer la quantité d'ajustement de CQI sur la base en outre des résultats de démodulation des N blocs de transport décodés et de quantités d'ajustement prédéfinies correspondant aux résultats de démodulation, chaque bloc de transport étant utilisé pour transmettre un signal de données, N étant supérieur ou égal à 1 ;
déterminer une deuxième valeur de CQI initiale sur la base de la première valeur de CQI initiale et de la valeur d'ajustement de CQI ; et
déterminer la valeur de CQI rapportée sur la base de la deuxième valeur de CQI initiale et de la politique d'ajustement de CQI.

10. Dispositif terminal (600) selon la revendication 9, dans lequel l'unité de traitement (620) est spécifiquement configurée pour :
déterminer la quantité d'ajustement de CQI selon la Formule (7) : $ΔCQI = a * n 1 - b * n 2$ (7), dans laquelle
a est une quantité d'ajustement de CQI pour un décodage réussi, n1 est une quantité de fois pour un décodage réussi, b est une quantité d'ajustement pour un décodage échoué, n2 est une quantité de fois pour un décodage échoué, et n1+n2=N.

11. Dispositif terminal (600) selon la revendication 9, dans lequel l'unité de traitement (620) est spécifiquement configurée pour :
déterminer la quantité d'ajustement de CQI selon la Formule (8) : $ΔCQI = f \left(k\right) = c * f \left(k-1\right) + d * Δ$ (8), dans laquelle
f(k) est une quantité d'ajustement pour le k^{e} ordonnancement, Δ est une quantité d'ajustement prédéfinie correspondant à un résultat de démodulation précédent, et lorsque la démodulation réussit, Δ=a, ou lorsque la démodulation échoue, Δ=-b.

12. Dispositif terminal (600) selon l'une quelconque des revendications 9 à 11, dans lequel l'unité de traitement (620) est spécifiquement configurée pour :
lorsqu'un type de service d'un service en cours est un service sensible au retard, la politique d'ajustement de CQI modifie une valeur de CQI en une première valeur prédéfinie pour le rapport ; ou
lorsqu'un type de service d'un service en cours est un service sensible au retard, la politique d'ajustement de CQI est la suivante :
si la première valeur de CQI initiale est supérieure à un premier seuil, la valeur de CQI rapportée est égale à la première valeur de CQI initiale moins le premier seuil, ou si la première valeur de CQI initiale est inférieure ou égale au premier seuil, la valeur de CQI rapportée est égale à une deuxième valeur prédéterminée.

13. Support de stockage lisible par ordinateur, dans lequel le support de stockage lisible par ordinateur stocke un programme informatique et lorsque le programme informatique est exécuté sur un dispositif terminal, le procédé selon l'une quelconque des revendications 1 à 6 est mis en œuvre.
